# NEUE EUROPÄISCHE PATENTSCHRIFT

(11) **EP 2 327 494 B2**
(45) Veröffentlichungstag und Bekanntmachung des Hinweises auf die Entscheidung über den Einspruch: **21.07.2021**
(45) Hinweis auf die Patenterteilung: 21.10.2015
(21) Anmeldenummer: 10192322.5
(22) Anmeldetag: 24.11.2010
(51) Int. Cl.: B23B 27/14

(54) **Schneidwerkzeug und Verfahren zur Herstellung eines Schneidwerkzeugs**
Cutting tool
Outil de coupe

(30) Priorität: 27.11.2009 DE 102009056039
(43) Veröffentlichungstag der Anmeldung: 01.06.2011
(73) Patentinhaber: Schaeffler Technologies AG & Co. KG, 91074 Herzogenaurach (DE)
(72) Erfinder: Huber, Wilfried, 91086, Aurachtal (DE); Adam, Tobias, 91074, Herzogenaurach (DE); Raichici, Herbert, 91466, Gerhardshofen (DE)

(56) Entgegenhaltungen:
- EP-A1- 0 517 019
- EP-A1- 1 023 961
- EP-A1- 2 067 552
- EP-A2- 0 360 774
- EP-B1- 0 706 432
- WO-A1-95/07783
- WO-A1-03/064084
- WO-A2-2004/050314
- FR-A1- 2 801 234
- JP-A- H1 112 736
- JP-A- H1 177 409
- JP-A- 2007 216 327
- JP-A- 2009 113 120
- KR-B1- 100 565 967
- US-A- 4 710 069
- US-A- 4 880 338
- US-A- 5 026 960
- US-A- 5 074 720
- US-A- 5 630 681
- US-A- 5 776 355
- US-A- 5 791 833
- US-A1- 2006 228 179
- US-A1- 2008 031 698
- US-B1- 6 267 541
- US-B1- 6 524 036
- US-B2- 7 278 805
- US-E- R E37 595

## Beschreibung

### Gebiet der Erfindung

Die Erfindung betrifft ein insbesondere zum Zerspanen metallischer Werkstücke vorgesehenes Schneidwerkzeug nach dem Oberbegriff des Anspruchs 1. Weiter betrifft die Erfindung ein Verfahren zur Herstellung eines Schneidwerkzeugs.

### Hintergrund der Erfindung

Aus der EP 0 706 432 B1 ist ein Schneideinsatz bekannt, dessen Schneidkanten abschnittsweise durch Ausnehmungen durchbrochen sind. Die Ausnehmungen durchbrechen hierbei eine schmale Fase des Schneideinsatzes und sind in Richtung senkrecht zur Schneidkante tiefer als die betreffende Breite der Fase ausgeführt. Die Aussparungen sollen den Spanablauf an der Schneidkante gezielt beeinflussen, um einen weichen und reibungsarmen Schnitt zu ermöglichen.

EP 0 706 432 B1 offenbart ein Schneidwerkzeug gemäß dem Oberbegriff des Anspruchs 1 und ein Verfahren zur Herstellung eines Schneidwerkzeugs gemäß dem Oberbegriff des Anspruchs 16.

Verschiedene gängige Geometrien von Schneidwerkzeugen sind aus der Norm DIN ISO 1832:2005-11 (Wendschneidplatten für Zerspanwerkzeuge) bekannt. Unter Ziff. 6.2.3 (T = gefast) zeigt Bild 6 beispielsweise eine gefaste Schneide.

Eine Sonderform eines als Wendeschneidplatte ausgebildeten Schneidwerkzeugs ist aus der DE 10 2008 001 846 A1 bekannt. Die Schneidkanten dieses Schneidwerkzeugs sind durch im Bereich der Spanflächen ausgebildete, im wesentlichen senkrecht zu den Schneidkanten verlaufende Stege verstärkt.

### Aufgabe der Erfindung

Der Erfindung liegt die Aufgabe zugrunde, ein zur Metallzerspanung, insbesondere zur Hartbearbeitung, geeignetes Schneidwerkzeug anzugeben, welches sich sowohl durch eine günstige Spanleitgeometrie als auch durch einen geringen Verschleiß auszeichnet.

### Zusammenfassung der Erfindung

Diese Aufgabe wird erfindungsgemäß gelöst durch ein Schneidwerkzeug mit den Merkmalen des Anspruchs 1 sowie durch ein Verfahren zur Herstellung eines Schneidwerkzeugs mit den Merkmalen des Anspruchs 16.

Im Folgenden im Zusammenhang mit dem Herstellungsverfahren erläuterte Ausgestaltungen und Vorteile gelten sinngemäß auch für das Schneidwerkzeug und umgekehrt.

Das Schneidwerkzeug weist eine Schneidkante sowie eine an diese anschließende, in eine Spanfläche übergehende Schutzfase auf. Ebenso schließt sich an die Schneidkante eine Freifläche an. Die an die Schneidkante anschließende Schutzfase weist eine Mehrzahl voneinander getrennter, geometrisch definierter Vertiefungen auf, welche rationell sowie präzise durch Laserbearbeitung eines Rohlings, insbesondere aus Hartmetall, herstellbar sind.

Die Grundform des Schneidwerkzeugs kann einer aus der Norm DIN ISO 1832:2005-11, Ziff. 4.1 bekannten Form entsprechen. Insbesondere kann es sich dabei um eine der mit dem Buchstabensymbol A, B, C, D, E, H, K, L, M, O, P, R, S, T, V oder W bezeichneten Schneidplattenformen handeln. Das Schneidwerkzeug kann entweder massiv ausgebildet oder mit mindestens einem Schneidteil bestückt sein (s. DIN ISO 1832:2005-11, Tab. 16). Sofern ein gesondertes Schneidteil vorhanden ist, ist dieses beispielsweise aus CBN (kubisches Bornitrid) gefertigt.

Prinzipiell ist eine Laserstrahlbearbeitung eines Schneidwerkzeugs beispielsweise aus der EP 0 842 004 B1 bekannt. Hierbei wird per Laserbearbeitung jedoch keine geometrisch definierte Struktur erzeugt, sondern lediglich die Oberflächenrauhigkeit beeinflusst.

Im Unterschied zum aus der EP 0 842 004 B1 bekannten Laserbearbeitungsverfahren werden erfindungsgemäß die Vertiefungen in der an die Schneidkante anschließenden Schutzfase vollständig per Laserbearbeitung erzeugt. Prinzipiell können die Vertiefungen beliebige definierte Konturen aufweisen, wobei sich abgerundete, insbesondere elliptische Konturen, als besonders vorteilhaft hinsichtlich der Spanableitung sowie der Standzeit des Werkzeugs erwiesen haben. Vorzugsweise beschreibt jede Vertiefung eine Ellipse mit einer großen Halbachse, welche sich orthogonal zur Schneidkante erstreckt. Die Gesamtzahl der im Bereich um die Schneidkante ausgebildeten Vertiefungen beträgt vorzugsweise zwischen 3 und 100,

Die insbesondere kreisrunden oder ovalen Vertiefungen sind einreihig parallel zur Schneidkante angeordnet. Der in Längsrichtung der Schneidkante gemessene Abstand zwischen jeweils zwei Vertiefungen ist hierbei vorzugsweise geringer als die in derselben Richtung gemessene Breite einer Vertiefung. Eine hohe Stabilität und Verschleißfestigkeit des Werkzeugs bleibt dadurch gewährleistet, dass der Abstand zwischen jeweils zwei Vertiefungen mehr als die Hälfte der Breite einer Vertiefung in Längsrichtung der Schneidkante beträgt.

Der in Längsrichtung der Schneidkante gemessene Abstand zwischen zwei Vertiefungen beträgt vorzugsweise mindestens 0,005 mm und höchstens 0,6 mm. Die in der selben Richtung gemessene Breite einer Vertiefung beträgt ebenfalls vorzugsweise mindestens 0,005 mm und höchstens 0,6 mm.

Im Vergleich zu den Abmessungen der Schneidkante sowie der Spanfläche und der Freifläche sind die Abmessungen der einzelnen Vertiefungen relativ gering. Die größte, in der Ebene der Schutzfase gemessene Abmessung jeder Vertiefung ist geringer als die maximale Entfernung des in der betreffenden Ebene liegenden Randes einer Vertiefung von der Schneidkante. In bevorzugter Ausgestaltung beträgt die größte Abmessung jeder Vertiefung mindestens 0,02 mm und maximal 0,4 mm. Die maximale Entfernung des Randes einer Vertiefung von der Schneidkante beträgt vorzugsweise mindestens 0,005 mm und höchstens 1,0 mm. Jede Vertiefung ist vorzugsweise nicht tiefer als 0,005 mm bis 0,6 mm.

Das definierte, per Laserbearbeitung erzeugte Vertiefungen in einer an die Schneidkante anschließenden Schutzfase aufweisende, beispielsweise als Wendeschneidplatte ausgebildete Schneidwerkzeug ist sowohl zur Weichbearbeitung, das heißt zur Bearbeitung von ungehärteten Metallteilen, als auch zur spanabhebenden Bearbeitung gehärteter Metallteile geeignet.

Nachfolgend werden ein nicht beanspruchtes Schneidwerkzeug sowie zwei Ausführungsbeispiele der Erfindung anhand einer Zeichnung näher erläutert. Hierin zeigen, teilweise vereinfacht:

### Kurze Beschreibung der Zeichnung

- Fig. 1: ausschnittsweise ein nicht beanspruchtes Schneidwerkzeug,
- Fig. 2: ein als Wendeschneidplatte ausgebildetes Schneidwerkzeug,
- Fig. 3 - 5: Details des Schneidwerkzeugs nach Fig. 2,
- Fig. 6: ein weiteres als Wendeschneidplatte ausgebildetes Schneidwerkzeug,
- Fig. 7 - 9: Details des Schneidwerkzeugs nach Fig. 6.

### Ausführliche Beschreibung der Zeichnung

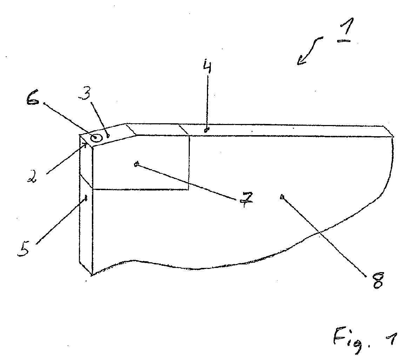

Die folgenden Ausführungen beziehen sich, soweit nicht anders angegeben, sowohl auf die lediglich der Erläuterung dienende Figur 1 als auch auf die beiden Ausführungsbeispiele. Einander entsprechende oder gleichwirkende Teile sind mit den gleichen Bezugszeichen gekennzeichnet.

Ein insgesamt mit dem Bezugszeichen 1 gekennzeichnetes Schneidwerkzeug weist eine Schneidkante 2 auf, an welche eine Schutzfase 3 grenzt, die in eine Spanfläche 4 übergeht. Weiter grenzt an die Schneidkante 2 eine Freifläche 5. In der Schutzfase 3 sind mehrere Vertiefungen 6 ausgebildet, welche durch Laserbearbeitung eines beispielsweise aus Hartmetall gefertigten Rohlings erzeugt wurden. Bei dem Schneidwerkzeug nach Fig. 1 sind die Vertiefungen 6 in einem Schneidteil 7 ausgeformt, welches in einen Grundkörper 8 des Schneidwerkzeugs 1 eingesetzt ist. Die Vertiefungen 6 bilden insgesamt eine definierte geometrische Struktur, jedoch nicht eine Spanleitstufe oder einen Spanbrecher im herkömmlichen, beispielsweise aus der DE 20 2006 002 827 U1 bekannten Sinne.

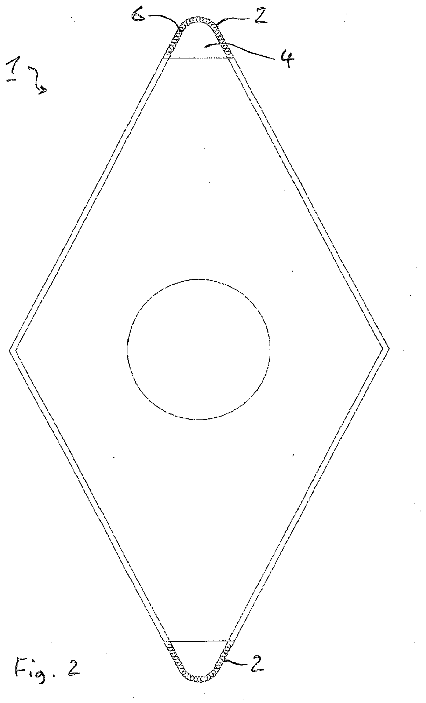

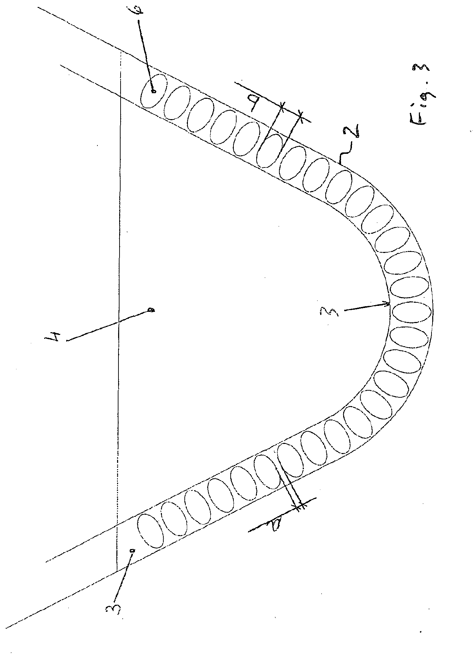

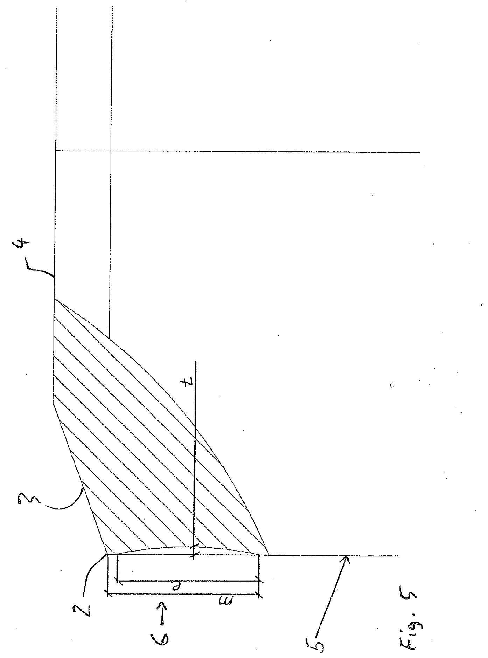

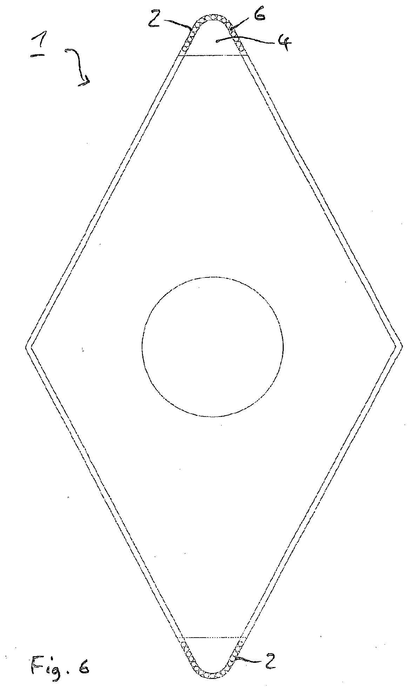

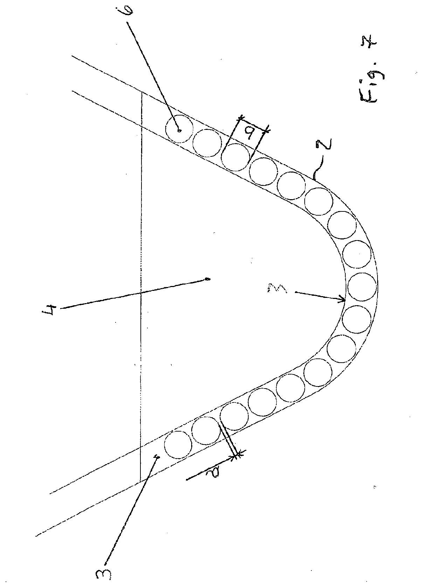

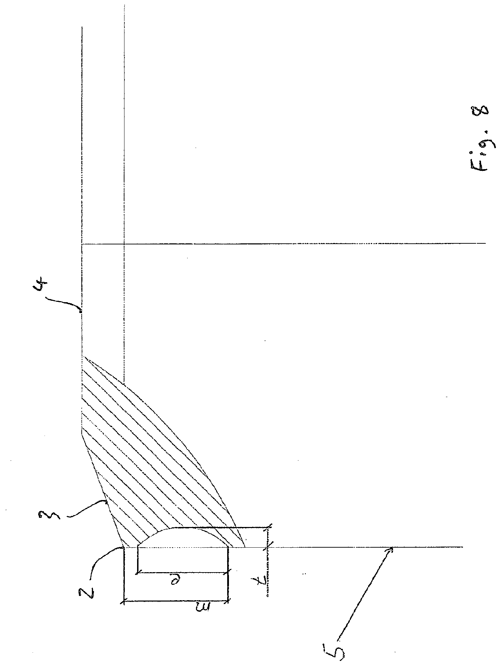

Im Ausführungsbeispiel nach den Figuren 2 bis 5 weist jede Vertiefung 6 eine elliptische Form aus, während im Ausführungsbeispiel nach den Figuren 6 bis 9 die Vertiefungen 6 kreisrund sind. In allen Fällen sind die Vertiefungen 6 in einer Reihe, längs der Schneidkante 2, angeordnet.

In Längsrichtung der Schneidkante 2 weist jede Vertiefung 6 eine Breite b auf, wobei zwei benachbarte Vertiefungen 6 jeweils, ebenfalls längs der Schneidkante 2 gemessen, einen Abstand a voneinander aufweisen. Der Abstand a beträgt weniger als die Breite b.

Orthogonal zur Schneidkante 2 gemessen weist die Vertiefung 6 eine Erstreckung e auf, welche im Fall elliptischer Vertiefungen 6 (Fig. 2 - 5) dem Doppelten der großen Halbachse und im Fall kreisrunder Vertiefungen 6 (Fig. 6 - 9) dem Durchmesser der entsprechenden, eine Ellipse beziehungsweise einen Kreis beschreibenden Kontur entspricht. Soweit die Vertiefungen 6 eine längliche Form aufweisen, wie im Ausführungsbeispiel nach den Figuren 2 bis 5 gegeben, erstrecken sie sich rechtwinklig zur Schneidkante 2.

Die Entfernung des am weitesten von der Schneidkante 2 entferntesten Punktes des Umfangs der Vertiefung 6 von der Schneidkante 2 wird als Maximalabstand m oder größter Abstand bezeichnet. Der Maximalabstand m ist größer als die Erstreckung e einer jeden Vertiefung 6, wobei die Erstreckung e die maximale Abmessung der Vertiefung 6 angibt. Sämtliche Vertiefungen 6 sind somit in einem Streifen, dessen Breite dem Maximalabstand m entspricht und welcher an die Schneidkante 2 grenzt und parallel zu dieser verläuft, angeordnet, wobei die Abmessung jeder Vertiefung 6 in jeder Dimension geringer als der Maximalabstand m ist.

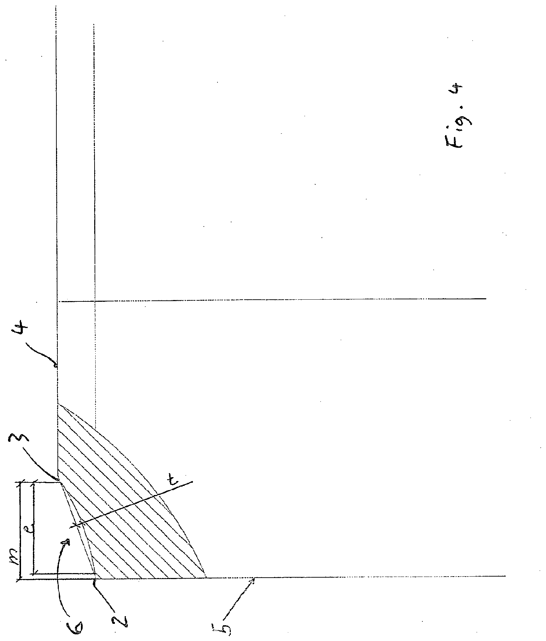

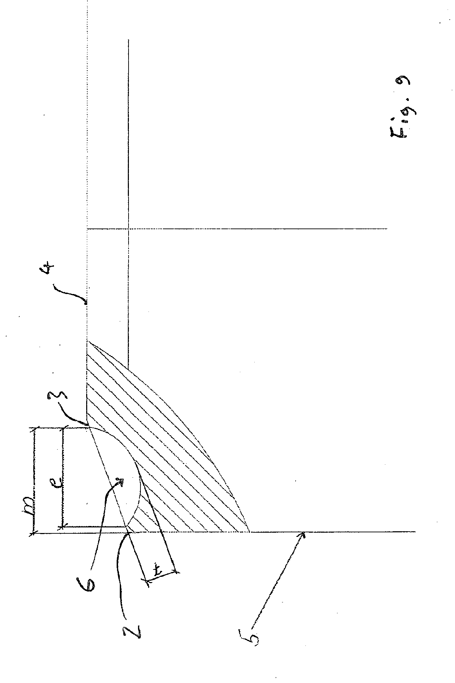

Die Tiefe jeder Vertiefung 6 ist mit t bezeichnet. Im Fall von in die Schutzfase 3 eingearbeiteten Vertiefungen 6 (Fig. 4, Fig. 9) wird die Tiefe t von der relativ zur Spanfläche 4 etwas geneigten Ebene, in welcher sich die Schutzfase 3 befindet, aus gemessen.

In jedem Fall sind durch die Erzeugung definierter geometrischer Strukturen mittels Laserbearbeitung insbesondere im Bereich um die Schneidkante 2 die Eigenspannungen in diesem Bereich optimiert. Auch sind günstige Eigenschaften im Bereich der Erwärmungszone des Schneidwerkzeugs 1 sowie ein geringer Schneidenverschleiß gegeben.

Das Schneidwerkzeug 1 ist beispielsweise zum Hartdrehen von zylindrischen Körpern geeignet. Insbesondere sind Wälzkörper mit dem Schneidwerkzeug 1 herstellbar. Die Schneidkante 2 kann vollständig gerade, teilweise gekrümmt oder vollständig gekrümmt sein. Eine Mehrzahl gleichartiger Schneidwerkzeuge 1, nämlich Schneidplatten, kann beispielsweise an einem Fräskopf befestigt sein. Ebenso ist es möglich, das Schneidwerkzeug 1 als einteiliges Werkzeug, beispielsweise Bohrer, mit mehreren geometrisch bestimmten Schneidkanten 2 sowie zugehörigen, jeweils Vertiefungen 6 aufweisenden, an die Schneidkanten 2 grenzenden Flächen 3 nämlich Schutzfasen 3 zu gestalten.

### Bezugszeichenliste

- 1: Schneidwerkzeug
- 2: Schneidkante
- 3: Schutzfase
- 4: Spanfläche
- 5: Freifläche
- 6: Vertiefung
- 7: Schneidteil
- 8: Grundkörper

- a: Abstand
- b: Breite
- e: Erstreckung
- m: Maximalabstand
- t: Tiefe

## Patentansprüche

1. Schneidwerkzeug, mit einer Schneidkante (2) und einer an diese anschließenden, in eine Spanfläche (4) übergehenden Schutzfase (3), sowie mit einer an die Schneidkante (2) anschließenden Freifläche (5), wobei ausschließlich die Schutzfase (3) eine Mehrzahl voneinander getrennter, geometrisch definierter Vertiefungen (6) aufweist, welche einreihig parallel zur Schneidkante (2) angeordnet sind, wobei die größte, in der Ebene der Schutzfase (3) gemessene Erstreckung (e) jeder Vertiefung (6) geringer als der größte Abstand (m) der Kontur einer Vertiefung (6) von der Schneidkante (2) ist.

2. Schneidwerkzeug nach Anspruch 1, wobei die Vertiefungen (6) eine ovale Kontur aufweisen.

3. Schneidwerkzeug nach Anspruch 2, wobei die Vertiefungen (6) eine elliptische Kontur aufweisen.

4. Schneidwerkzeug nach Anspruch 3, wobei die große Halbachse der elliptischen Kontur orthogonal zur Schneidkante (2) angeordnet ist.

5. Schneidwerkzeug nach Anspruch 3, wobei die Vertiefungen (6) eine kreisrunde Kontur aufweisen.

6. Schneidwerkzeug nach Anspruch 1, wobei der Abstand (a) zwischen jeweils zwei Vertiefungen (6) geringer als die Breite (b) einer Vertiefung (6) in Längsrichtung der Schneidkante (2) ist.

7. Schneidwerkzeug nach Anspruch 6, wobei der Abstand (a) zwischen jeweils zwei Vertiefungen (6) mehr als die Hälfte der Breite (b) einer Vertiefung (6) in Längsrichtung der Schneidkante (2) beträgt.

8. Schneidwerkzeug nach Anspruch 1, wobei der Abstand (a) zwischen jeweils zwei Vertiefungen (6) mindestens 0,005 mm und höchstens 0,6 mm beträgt.

9. Schneidwerkzeug nach Anspruch 1, wobei die Breite (b) einer Vertiefung (6) in Längsrichtung der Schneidkante (2) mindestens 0,005 mm und höchstens 0,6 mm beträgt.

10. Schneidwerkzeug nach Anspruch 1, wobei die Erstreckung (e) jeder Vertiefung (6) mindestens 0,02 mm und höchstens 0,4 mm beträgt.

11. Schneidwerkzeug nach Anspruch 1, wobei der größte Abstand (m) der Kontur einer Vertiefung (6) von der Schneidkante (2) mindestens 0,005 mm und höchstens 1,0 mm beträgt.

12. Schneidwerkzeug nach Anspruch 1, wobei die Tiefe (t) einer Vertiefung (6) mindestens 0,005 mm und höchstens 0,6 mm beträgt.

13. Schneidwerkzeug nach Anspruch 1, wobei die Anzahl der Vertiefungen (6) mindestens 3 und höchstens 100 beträgt.

14. Schneidwerkzeug nach Anspruch 1, wobei die Schneidkante (2) durch ein Schneidteil (7) aus CBN gebildet ist.

15. Verwendung eines Schneidwerkzeugs nach Anspruch 1 zur spanenden Bearbeitung eines gehärteten Werkstücks aus Metall.

16. Verfahren zur Herstellung eines Schneidwerkzeugs, mit folgenden Schritten:
- Erzeugung eines eine Schneidkante (2) und eine an diese anschließende, in eine Spanfläche (4) übergehende Schutzfase (3), sowie eine an die Schneidkante (2) anschließende Freifläche (5) aufweisenden Rohlings,
- Einbringung von geometrisch definierten, voneinander getrennten, einreihig parallel zur Schneidkante (2) angeordneten Vertiefungen (6) ausschließlich in die Schutzfase (3) mittels Laserbearbeitung derart, dass die größte, in der Ebene der Schutzfase (3) gemessene Erstreckung (e) jeder Vertiefung (6) geringer als der größte Abstand (m) der Kontur einer Vertiefung (6) von der Schneidkante (2) ist.

17. Verfahren nach Anspruch 16, wobei der Rohling aus Hartmetall gefertigt wird.

## Claims

1. Cutting tool, having a cutting edge (2) and a protective bevel (3) that adjoins the latter and merges into a rake face (4), and also having a flank (5) that adjoins the cutting edge (2), wherein exclusively the protective bevel (3) has a plurality of mutually separate, geometrically defined depressions (6) which are arranged in a single row parallel to the cutting edge (2), wherein the greatest extent (e), measured in the plane of the protective bevel (3), of each depression (6) is smaller than the greatest distance (m) of the contour of a depression (6) from the cutting edge (2).

2. Cutting tool according to Claim 1, wherein the depressions (6) have an oval contour.

3. Cutting tool according to Claim 2, wherein the depressions (6) have an elliptical contour.

4. Cutting tool according to Claim 3, wherein the largest half-axis of the elliptical contour is arranged orthogonally to the cutting edge (2).

5. Cutting tool according to Claim 3, wherein the depressions (6) have a circular contour.

6. Cutting tool according to Claim 1, wherein the distance (a) between in each case two depressions (6) is less than the width (b) of a depression (6) in the longitudinal direction of the cutting edge (2).

7. Cutting tool according to Claim 6, wherein the distance (a) between in each case two depressions (6) is more than half the width (b) of a depression (6) in the longitudinal direction of the cutting edge (2).

8. Cutting tool according to Claim 1, wherein the distance (a) between in each case two depressions (6) is at least 0.005 mm and at most 0.6 mm.

9. Cutting tool according to Claim 1, wherein the width (b) of a depression (6) in the longitudinal direction of the cutting edge (2) is at least 0.005 mm and at most 0.6 mm.

10. Cutting tool according to Claim 1, wherein the extent (e) of each depression (6) is at least 0.02 mm and at most 0.4 mm.

11. Cutting tool according to Claim 1, wherein the greatest distance (m) of the contour of a depression (6) from the cutting edge (2) is at least 0.005 mm and at most 1.0 mm.

12. Cutting tool according to Claim 1, wherein the depth (t) of a depression (6) is at least 0.005 mm and at most 0.6 mm.

13. Cutting tool according to Claim 1, wherein the number of depressions (6) is at least 3 and at most 100.

14. Cutting tool according to Claim 1, wherein the cutting edge (2) is formed by a cutting part (7) made of CBN.

15. Use of a cutting tool according to Claim 1 for the machining of a hardened workpiece made of metal.

16. Method for producing a cutting tool, having the following steps of:
- producing a blank that has a cutting edge (2) and a protective bevel (3) that adjoins the latter and merges into a rake face (4), and also a flank (5) that adjoins the cutting edge (2),
- introducing geometrically defined, mutually separate depressions (6) that are arranged in a single row parallel to the cutting edge (2) into the protective bevel (3) exclusively, wherein the depressions (6) have been introduced into the protective bevel (3) by means of laser machining such that the greatest extent (e), measured in the plane of the protective bevel (3), of each depression (6) is smaller than the greatest distance (m) of the contour of a depression (6) from the cutting edge (2).

17. Method according to Claim 16, wherein the blank is manufactured from hard metal.

## Revendications

1. Outil de coupe, comprenant une arête de coupe (2) et un biseau de protection (3) se raccordant à celle-ci, se prolongeant par une surface d'enlèvement de copeaux (4), et comprenant une surface de dépouille (5) se raccordant à l'arête de coupe (2), exclusivement le biseau de protection (3) présentant une pluralité de renfoncements (6) définis géométriquement et séparés les uns des autres, qui sont disposés en une seule rangée parallèlement à l'arête de coupe (2), dans laquelle la plus grande étendue (e), mesurée dans le plan du biseau de protection (3), de chaque renfoncement (6) est inférieure à la plus grande distance (m) du contour d'un renfoncement (6) depuis l'arête de coupe (2).

2. Outil de coupe selon la revendication 1, dans laquelle les renfoncements (6) présentent un contour ovale.

3. Outil de coupe selon la revendication 2, dans laquelle les renfoncements (6) présentent un contour elliptique.

4. Outil de coupe selon la revendication 3, dans laquelle le grand demi-axe du contour elliptique est orienté perpendiculairement à l'arête de coupe (2) .

5. Outil de coupe selon la revendication 3, dans laquelle les renfoncements (6) présentent un contour circulaire.

6. Outil de coupe selon la revendication 1, dans laquelle la distance (a) entre deux renfoncements respectifs (6) est inférieure à la largeur (b) d'un renfoncement (6) dans la direction longitudinale de l'arête de coupe (2).

7. Outil de coupe selon la revendication 6, dans laquelle la distance (a) entre deux renfoncements respectifs (6) est supérieure à la moitié de la largeur (b) d'un renfoncement (6) dans la direction longitudinale de l'arête de coupe (2).

8. Outil de coupe selon la revendication 1, dans laquelle la distance (a) entre deux renfoncements respectifs (6) vaut au moins 0,005 mm et au plus 0,6 mm.

9. Outil de coupe selon la revendication 1, dans laquelle la largeur (b) d'un renfoncement (6) dans la direction longitudinale de l'arête de coupe (2) vaut au moins 0,005 mm et au plus 0,6 mm.

10. Outil de coupe selon la revendication 1, dans laquelle l'étendue (e) de chaque renfoncement (6) vaut au moins 0,02 mm et au plus 0,4 mm.

11. Outil de coupe selon la revendication 1, dans laquelle la plus grande distance (m) du contour d'un renfoncement (6) depuis l'arête de coupe (2) vaut au moins 0,005 mm et au plus 1,0 mm.

12. Outil de coupe selon la revendication 1, dans laquelle la profondeur (t) d'un renfoncement (6) vaut au moins 0,005 mm et au plus 0,6 mm.

13. Outil de coupe selon la revendication 1, dans laquelle le nombre des renfoncements (6) est d'au moins 3 et d'au plus 100.

14. Outil de coupe selon la revendication 1, dans laquelle l'arête de coupe (2) est formée par un organe de coupe (7) en CBN.

15. Utilisation d'un outil de coupe selon la revendication 1, pour l'usinage par enlèvement de copeaux d'une pièce trempée en métal.

16. Procédé de fabrication d'un outil de coupe comprenant les étapes suivantes :
- production d'une ébauche présentant une arête de coupe (2) et un biseau de protection (3) se raccordant à celle-ci, se prolongeant par une surface d'enlèvement de copeaux (4), ainsi qu'une surface de dépouille (5) se raccordant à l'arête de coupe (2),
- réalisation, exclusivement dans le biseau de protection (3), de renfoncements (6) définis géométriquement, séparés les uns des autres et disposés en une seule rangée parallèlement à l'arête de coupe (2),
dans laquelle les renfoncements (6) dans le biseau de protection (3) sont réalisés par usinage laser de telle sorte que la plus grande étendue (e) de chaque renfoncement (6), mesurée dans le plan du biseau de protection (3), soit inférieure à la plus grande distance (m) du contour d'un renfoncement (6) depuis l'arête de coupe (2).

17. Procédé selon la revendication 16, dans laquelle l'ébauche est fabriquée en métal dur.
